# EUROPEAN PATENT SPECIFICATION

(11) **EP 2 094 482 B1**
(45) Date of publication and mention of the grant of the patent: **06.03.2013**
(21) Application number: 07848722.0
(22) Date of filing: 17.12.2007
(51) Int. Cl.: B32B 25/14, G03G 7/00

(54) **LABELS**
ETIKETTEN
ÉTIQUETTES

(30) Priority: 18.12.2006 GB 0625171; 24.01.2007 GB 0701339; 23.08.2007 GB 0716453
(43) Date of publication of application: 02.09.2009
(73) Proprietor: Innovia Films Limited, Wigton Cumbria CA7 9BG (GB)
(72) Inventor: MACINTYRE, Fiona, Cumbria CA2 4BE (GB)
(74) Representative: Brand, Thomas Louis
(86) International application number: PCT/GB2007/050762
(87) International publication number: WO 2008/075098

(56) References cited:
- WO-A-2004/024445
- JP-A- 9 114 380

## Description

The present invention relates to an inherently printable labelstock film having good ink adhesion properties, and relates more particularly to an improved inherently printable film having good ink adhesion properties in the absence of any topcoat to the film, and to labels made therefrom.

In recent years, diversification of printed products has required printing on a wide variety of materials in sheets; for example papers, synthetic papers, polymer films such as thermoplastic resin films, metallic foils, metallised sheets, etc. These printed items are printed by methods such as offset printing, gravure, flexography, screen press printing and letter press printing. Commonly, inkjet printing is now used to print directly onto the surface of various types of polymer film, such as polyester film for example.

This invention is particularly concerned with polyolefinic films for use in label and certain graphic arts applications, but may also utilise substrates other than polyolefinic films. It is believed however that polyolefinic films may provide an environmentally friendly alternative to PVC films which are commonly used in labels and graphic arts applications at present.

Uncoated PVC film has been used as a film substrate for printing but has other disadvantages as a substrate for applications such as graphic arts or labels. However, many non-PVC films are not very receptive to common inks such as solvent based inks, used for example in inkjet printing and UV inks, used for example in flexo and screen printing. For this reason non-PVC films, such as polyolefin films for example, are commonly provided with a topcoat to assist ink printability. It would however be desirable to provide an inherently printable non-PVC film substrate, such as a polyolefinic film substrate (e.g. a polyethylene or polypropylene film substrate) to be used without any topcoat and which provides some or all of those properties desired in an ink printable surface.

Due to the constraints imposed on the ink characteristics due to the nature of the various printing processes, such as flexo, screen and inkjet processes, this latter whether in a thermal or piezo inkjet printer, it is preferable that ink receiving surface of the substrate is modified rather than the ink itself to optimise some or all of the desired properties in the final printed image.

Some of the criteria that an ideal ink receptive substrate will possess include some or all of the following, depending on the particular application (e.g. for a 'no-label' look transparency is important rather than whiteness or opacity). A suitable ink printable substrate will have good optical properties such as brightness, whiteness, gloss, opacity and/or colour range to give high-quality images. The substrate should be compatible with components in the ink to ensure that the final ink image has sufficient fastness and low tendency to fade, for example when exposed to UV light. The absorbency of the film surface is important. Some printing processes place special demands on the substrate which is printed with a large amount of liquid, and yet is expected to dry quickly without changing size or shape. Although paper fibres absorb liquid well, they swell and deform resulting in surface imperfections and such moisture-induced undulations have a detrimental effect on image quality. Paper is also unsuitable for many applications as described herein. A suitable substrate will be durable, in that it will maintain its structure for the time of the print. Desirable properties of such a film therefore include dimensional stability, tear resistance, thermal stability, and water and light resistance. Thus to produce a good image the ink receiving surface should be dimensionally and thermally stable, i.e. it should not tear, stretch or deform, and it should be smooth and waterproof, maintain its shape and be resistant to many chemicals, and should not swell or shrink with moisture or humidity to an unacceptable degree. Further desirable properties include that co-extruded layers should not delaminate. This is particularly important when forming biaxially orientated layers using the so called bubble process.

EP 0262228 discloses a transparent plastic printing film which is provided with a top coating of an ink setting layer formed of a solution of a rubber resin and/or styrene resin and silica sol.

JP 2004195744 discloses a printing medium which comprises a compounded resin layer of a styrene-ethylene-propylene-styrene block copolymer and an ethylenic copolymer.

US 2005/0142372 discloses a biaxially orientated multilayer film having a polyolefinic core layer and a skin layer containing a styrene-butadiene copolymer or a cyclic olefin copolymer.

US 2004/0137206 discloses a packaging film including a first layer elastomer, a second layer of polyolefin in contact with the first layer and a third layer of elastomer in contact with the second layer.

US 6783864 discloses a film comprising two outer layers consisting of a mixture of styrene homopolymers and styrene-butadiene-styrene block copolymers and a core polyolefin layer.

WO 2004/024445 A discloses a multilayer film structure used in the manufacture of labels, with a first and a second outer layer and a third inner layer between the first and second layer, all layers consisting essentially of polystyrene, whereby the overall thickness is in the range of 0,012 to 0,102 mm, the first and second layer consist of general purpose styrenic resin whereas the third layer does consist of a modified tough polystyrene with modifiers such as butadiene and/or acrylate. The minimum thickness of the outer layers is 3 microns.

It is an object of the invention to provide a polymer labelstock film having an improved inherently ink printable surface. It is a further object of the invention to overcome some of the problems described herein to provide a labelstock film substrate which is printable by printing methods such as flexo, screen and inkjet printing, for example by providing a substrate suitable for inherent printability in the absence of any topcoat layer.

According to the present invention there is provided an inherently ink printable multi-layer facestock film for labels having a substrate core layer comprising a polymeric material and at least one skin layer which is ink printable, the ink printable skin layer comprising a copolymer of styrene and butadiene, and polystyrene in an amount of from 0% to about 30% by weight of the skin layer.

The skin layer has a thickness of from 0.1µm to 0.5µm, and we have surprisingly found that good inherent ink printability can be achieved with skin layer thicknesses in this range.

Also provided in accordance with the invention is an adhesive containing labelstock for use in adhesive labels which comprises: a multilayer film facestock as hereinbefore described and an adhesive layer provided on the facestock.

In the labelstock film of the invention, the adhesive layer may be a pressure-sensitive adhesive layer.

The labelstock film of the invention may further comprise a release coated liner in contact with and releasably joined to the adhesive layer.

The invention also provides a label made from the aforesaid facestock, and an adhesive label die-cut from the aforesaid labelstock.

We have found that multi-layer films for labelstock application with improved printability on a skin layer thereof can be realised by the use of a copolymer of styrene and butadiene in the said skin layer. Preferably the copolymer is a block copolymer of styrene and butadiene. The copolymer may in some cases be blended with other materials in the skin layer. However, if the copolymer is blended with a styrenic homopolymer, we have found that it is necessary for any such homopolymer to be present in the skin layer in an amount (if present at all) of less than about 30% by weight of the skin layer in order to maintain satisfactory printability and/or ink adherence on the film. When present, the styrenic homopolymers are provided in the skin layer preferably in an amount of less than 20% by weight of the coating, more preferably of less than 17.5% by weight of the coating, still more preferably less than about 15% by weight of the coating and most preferably less than about 10% by weight of the coating. In one embodiment of the invention the skin layer comprises no styrenic homopolymer, or substantially no styrenic homopolymer. Without wishing to be bound by any such theory, it is thought likely that the amorphous nature of the copolymer in the skin layer provides a satisfactory medium for ink penetration and adherence, and that such amorphousness may be compromised by too high a quantity of styrenic homopolymer in the skin layer composition.

The copolymeric skin layer has been found satisfactorily to adhere to the substrate layer, and is generally coextruded onto the substrate layer, with no insurmountable problems being encountered with regard to adherence of the skin layer and the substrate layer. Nevertheless, in some cases it may be desirable to increase the degree of adherence between these layers, in which case the multi-layer film may comprise at least one tie constituent having compatibility with the polymeric material of the core layer and with the skin layer, the said compatibility of the tie constituent deterring delamination of the skin layer from the core layer. By "compatibility" is preferably meant that the tie constituent has an affinity, for example a chemical affinity, both for material of the skin layer and for material of the core layer.

The tie constituent, when present, may be provided in a tie layer of the film between the core layer and the at least one skin layer. Alternatively (or as well), the tie constituent may be provided in the core layer. Alternatively (or as well) the tie constituent may be provided in the skin layer. The tie constituent when present preferably comprises a derivative of styrene-butadiene, for example hydrogenated styrene-butadiene.

The layers of the film are preferably coextruded, or provided by melt coat extrusion of the at least one skin layer onto the core layer or onto any further coating or extruded layer provided on the core layer.

Thus, according to one aspect of the present invention there is provided an inherently ink printable multi-layer facestock film for labels having a substrate core layer and at least one skin layer which is ink printable, the ink printable skin layer comprising a copolymer of styrene and butadiene, the substrate core layer and the skin layer being coextruded to form the multi-layer film.

By "ink printable" is generally meant that in a standard ink pull-off tape test or UV flexo tests conducted on a film according to the invention which has been printed on its skin layer with a compatible ink and then cured (for example UV cured) and allowed to age for 24 hrs before testing, less than 50%, preferably less than 40%, more preferably less than 30%, still more preferably less than 20% and most preferably less than 10% of the ink is removed from the printed surface in the test. In a particularly preferred embodiment of the invention, less than 5%, or even as low as substantially 0%, of the ink is removed in such testing.

Also by "ink printable" is generally meant that in a standard ink pull-off tape test or UV flexo tests conducted on a film according to the invention which has been printed on its skin layer with a compatible ink and then tested immediately thereafter, less than 75%, preferably less than 60%, more preferably less than 50%, still more preferably less than 40% and most preferably less than 30% of the ink is removed from the printed surface in the test. In a particularly preferred embodiment of the invention, less than 20%, or even below 10%, of the ink is removed in such testing.

Also provided in accordance with the present invention is a polymer labelstock film in accordance with the above printed on its skin layer with at least one ink.

The invention also provides a process for ink printing comprising providing a film in accordance with the above and supplying to the skin layer of the film by means of screen, flexo, inkjet or other printing means, at least one compatible ink.

The core layer of the film may comprise additional materials such as anti-block additives, opacifiers, fillers, UV absorbers, cross-linkers, colourants, anti-static agents, antioxidants, slip additives and the like.

The tie layer of the film, when present, may comprise additional materials such as anti-block additives, opacifiers, fillers, UV absorbers, cross-linkers, colourants, anti-static agents, antioxidants, slip additives and the like.

The skin layer of the film may comprise additional materials such as anti-block additives, opacifiers, fillers, UV absorbers, cross-linkers, colourants, anti-static agents, antioxidants, slip additives and the like.

The film of the invention may be further treated, by corona discharge treating for example, further to improve ink receptivity of the film.

The polymeric film can be made by any process known in the art, including, but not limited to, cast sheet, cast film, or blown film. The film core substrate may comprise a polyolefin film, for example polyethylene, polypropylene, mixtures thereof, and/or other known polyolefins.

This invention may be particularly applicable to films comprising cavitated or non-cavitated polypropylene films, with a polypropylene core and skin layers with a thickness substantially below that of the core layer. The film may have additional layers around the core layer, for example comprising copolymers of ethylene and propylene or terpolymers of propylene, ethylene and butylene. The film may comprise a biaxially orientated polypropylene (BOPP) film, which may be prepared as balanced films using substantially equal machine direction and transverse direction stretch ratios, or can be unbalanced, where the film is significantly more orientated in one direction (MD or TD). Sequential stretching can be used, in which heated rollers effect stretching of the film in the machine direction and a stenter oven is thereafter used to effect stretching in the transverse direction. Alternatively, simultaneous stretching, for example, using the so-called bubble process, or simultaneous draw stenter stretching may be used.

Alternatively, the film core substrate may comprise a polyester film, a polyamide film, a polyurethane film, a polyvinylhalide film or an acetate film.

The surface of the film has improved ink adhesion properties in relation to a film manufactured from polyolefin materials in the same or similar manner as the film of the invention, but without an effective amount of styrene-butadiene in the skin layer.

The films used in accordance with the present invention can be of a variety of thicknesses according to the application requirements. For example they can be from about 10 to about 240µm thick and preferably from about 50 to about 90µm thick.

In a multi-layer film in accordance with the invention having at least a substrate core layer and a skin layer, the skin layer is ink printable and comprises a copolymer of styrene and butadiene making the skin layer surface ink printable. The skin layer preferably has a thickness of from about 0.1µm to about 0.5µm.

The invention will now be more particularly described with reference to the following examples.

### EXAMPLE 1

The compositions of this Example were prepared and tested on a bubble blown coextruded film of conventional clear BOPP film of 58µm thickness and 22.0 m²kg⁻¹ yield (corona discharge treated on the side to be printed) available commercially from Innovia Films Ltd under the trade mark Rayoface C58, with and without EVA (comparative) and styrene-butadiene (in accordance with the invention) added to, or constituting, the coextruded skin layer.

EVA (ethylene/vinyl acetate copolymer) is available under the trade name Evatane from Arkema.

Styrene Butadiene copolymer is commercially available as K-Resin DK11NW supplied by Chevron Phillips.

The Dyne level of each sample was measured and printing on the samples was then effected using a handheld UV flexo printing technique. The ink selected for testing purposes was W300 Paragon White, which was cured with a double pass at 60ft/s and 200 Watts/inch.

The printed samples were then investigated for ink adhesion properties by a standard ink pull-off tape test. This technique involves applying a 10cm length of Scapa tape to the surface of the printed film using a standard weighted hand-roller. The adhesive tape is subsequently pulled-off from the substrate at an approximate angle of 135° at speed and the percentage ink pull-off determined by the tester. In addition Lab based UV flexo experiments have confirmed the ink pull-off values of <5 and 0 for the 100% K-RESIN film tested immediately post cure and 24 hours post cure respectively. Solvent based gravure printing also achieved the same results.

The results are presented in Table 1:

**Table 1.**

| Sample | Dyne Level | Ink pull-off % at 0 hours | Ink pull-off % at 24 hours |
|---|---|---|---|
| C58 | 44 | 95 | 95 |
| C58 + 20% EVA | 46 | 95 | 90 |
| C58 + 40% EVA | 46 | 80 | 10 |
| C58 + 100% K-Resin | 54 | <5 | 0 |

These result demonstrated the improved ink adhesion properties of the films of the invention.

The present invention therefore provides an improved inherently ink printable surface.

### EXAMPLE 2

The compositions of Example 1 are prepared and tested on a bubble blown coextruded film, but with a tie layer formed of commercially available hydrogenated styrene-butadiene rubber supplied as Tuftec^{™} by Asahi.

Similar results are obtained but the coextruded film is envisaged in some respects to be more robust with less tendency for the skin layer to peel off (i.e. delaminate) under harsh test conditions.

### EXAMPLE 3

The compositions of this example were prepared and tested on a bubble blown coextruded film, but with the outer skin layer comprising various blends of K-Resin with polystyrene (Table 2). The polystyrene is the commercially available grade GPPS 145D by BASF.

Blending of K-Resin with polystyrene is carried out on a Francis Shaw twin screw extruder.

**Table 2**

| **Skin layer blend** | **Dyne level post-treat** | **Ink pull-off% at 0hrs** | **Ink Pull-off% at 24hrs** |
|---|---|---|---|
| K-R/PS 100%/0% | 54 | <5 | 0 |
| K-R/PS 95%/5% | 54 | <5 | 0 |
| K-R/PS 90%/10% | 52 | 10 | 5 |
| K-R/PS 85%/15% | 52 | 10 | 5 |
| K-R/PS 80%/20% | 52 | 15 | 10 |
| K-R/PS 75%/25% | 50 | 15 | 10 |
| K-R/PS 65%/35% | 50 | 30 | 20 |

The data from Table 2 shows a decrease in ink adhesion performance as the level of polystyrene in the skin layer blend is increased.

### EXAMPLE 4

The compositions of this example were prepared and tested on a bubble blown coextruded film, but with the outer skin layer comprising various blends of K-Resin with polystyrene (Table 3). The polystyrene is the commercially available grade GPPS 145D by BASF.

Blending of K-Resin with polystyrene is carried out on a Francis Shaw twin screw extruder.

**Table 3**

| **Skin layer blend** | **Dyne Level post-treat** | **Ink pull-off % at 0 hrs** | **Ink pull-off % at 24 hrs** |
|---|---|---|---|
| K-R/PS 100%/0% | 54 | <5 | 0 |
| K-R/PS 95%/5% | 52 | <5 | 0 |
| K-R/PS 90%/10% | 52 | 5 | 5 |
| K-R/PS 85%/15% | 50 | 20 | 30 |
| | | | |
| K-R/PS 80%/20% | 48 | 30 | 30 |
| K-R/PS 75%/25% | 46 | 15 | 25 |
| K-R/PS 65%/35% | 40 | 40 | 35 |

The data from Table 3 shows a decrease in ink adhesion performance as the level of polystyrene in the skin layer blend is increased.

### EXAMPLE 5

The composition of this example was prepared and tested on bubble produced cast tube which was externally melt coat extruded and then biaxially stretched to form a film. The outer skin layer comprised of K-Resin (Table 4).

**Table 4**

| **Melt coat extruded Skin layer** | **Ink pull-off% at 0hrs** | **Ink pull-off% at 24hrs** |
|---|---|---|
| K-Resin | <5 | <5 |

The data from Table 4 demonstrated the improved ink adhesion properties of the melt coat extruded films of the invention.

## Claims

1. An inherently ink printable multi-layer facestock film for labels having a substrate core layer comprising a polymeric material and at least one skin layer which is ink printable, the ink printable skin layer having a thickness of from 0.1µm to 0.5µm and comprising: a copolymer of styrene and butadiene; and polystyrene in an amount of from 0% to about 30% by weight of the skin layer.

2. A label facestock film according to claim 1 wherein the ink printable skin layer comprises from 0% by weight to less than 20% by weight of polystyrene.

3. A label facestock film according to claim 1 or claim 2 wherein the copolymer is a block copolymer of styrene and butadiene.

4. A label facestock film according to any one of claims 1 to 3 comprising substantially no styrenic homopolymer

5. A label facestock film according to any one of claims 1 to 4 wherein the copolymer is blended with one or more other materials in the skin layer.

6. A label facestock film according to claim 5 wherein the copolymer is blended with a styrenic homopolymer.

7. A label facestock film according to claim 6 wherein the styrenic homopolymer is present in the skin layer in an amount of less than 20% by weight of the coating

8. A label facestock film according to any one of claims 1 to 7 comprising at least one tie constituent having compatibility with the polymeric material of the core layer and with the skin layer, the said compatibility of the tie constituent deterring delamination of the skin layer from the core layer, the at least one tie constituent optionally being provided in a tie layer of the film between the core layer and the at least one skin layer or in the core layer or in the skin layer, and the tie constituent optionally comprising a derivative of styrene-butadiene, optionally hydrogenated styrene-butadiene.

9. A label facestock film according to any one of claims 1 to 8 printed on the skin layer with at least one ink.

10. A label made from a facestock in accordance with claim 9.

11. A labelstock film for adhesive labels which comprises: a multilayer film facestock in accordance with any one of claims 1 to 9, and an adhesive layer provided on the facestock.

12. A labelstock film according to claim 11 wherein the adhesive layer is a pressure-sensitive adhesive layer.

13. A labelstock film according to claim 11 or claim 12 provided with a release coated liner in contact with and releasably joined to the adhesive layer

14. An adhesive label die-cut from the labelstock of claim 13.

## Patentansprüche

1. Inhärent mit Tinte bedruckbare mehrschichtige Obermaterialfolie für Etiketten mit einer Substratkernschicht, die ein Polymermaterial und mindestens eine Außenschicht, die mit Tinte bedruckbar ist, umfasst, wobei die mit Tinte bedruckbare Außenschicht eine Dicke von von 0,1 µm bis 0,5 µm aufweist und Folgendes umfasst: ein Copolymer aus Styrol und Butadien; und Polystyrol in einer Menge von von 0 Gew.-% bis ungefähr 30 Gew.-% der Außenschicht.

2. Etikettenobermaterialfolie nach Anspruch 1, wobei die mit Tinte bedruckbare Außenschicht von 0 Gew.-% bis weniger als 20 Gew.-% Polystyrol umfasst.

3. Etikettenobermaterialfolie nach Anspruch 1 oder Anspruch 2, wobei es sich bei dem Copolymer um ein Blockcopolymer aus Styrol und Butadien handelt.

4. Etikettenobermaterialfolie nach einem der Ansprüche 1 bis 3, die im Wesentlichen kein Styrol-Homopolymer umfasst.

5. Etikettenobermaterialfolie nach einem der Ansprüche 1 bis 4, wobei das Copolymer mit einem oder mehreren anderen Materialien in der Außenschicht gemischt ist.

6. Etikettenobermaterialfolie nach Anspruch 5, wobei das Copolymer mit einem Styrol-Homopolymer gemischt ist.

7. Etikettenobermaterialfolie nach Anspruch 6, wobei das Styrol-Homopolymer in einer Menge von weniger als 20 Gew.-% der Beschichtung in der Außenschicht vorhanden ist.

8. Etikettenobermaterialfolie nach einem der Ansprüche 1 bis 7, umfassend mindestens eine Haftkomponente, die Verträglichkeit mit dem Polymermaterial der Kernschicht und mit der Außenschicht aufweist, wobei die Verträglichkeit der Haftkomponente die Ablösung der Außenschicht von der Kernschicht verhindert, wobei die mindestens eine Hartkomponente optional in einer Haftschicht der Folie zwischen der Kernschicht und der mindestens einen Außenschicht oder in der Kernschicht oder in der Außenschicht vorgesehen ist, und die Haftkomponente optional ein Derivat von Styrol-Butadien, optional hydriertes Styrol-Butadien umfasst.

9. Etikettenobermaterialfolie nach einem der Ansprüche 1 bis 8, die mit mindestens einer Tinte auf der Außenschicht bedruckt ist.

10. Aus einem Obermaterial nach Anspruch 9 hergestelltes Etikett.

11. Etikettenmaterialfolie für Klebeetiketten, die Folgendes umfasst: ein mehrschichtiges Folienobermaterial nach einem der Ansprüche 1 bis 9 und eine auf dem Obermaterial vorgesehene Klebeschicht.

12. Etikettenmaterialfolie nach Anspruch 11, wobei es sich bei der Klebeschicht um eine Haftklebeschicht handelt.

13. Etikettenmaterialfolie nach Anspruch 11 oder Anspruch 12, die mit einer mit einem Trennmittel beschichteten Schutzfolie versehen ist, die die Klebschicht berührt und trennbar damit verbunden ist.

14. Klebeetikett, das aus dem Etikettenmaterial von Anspruch 13 gestanzt ist.

## Revendications

1. Film frontal à couches multiples essentiellement imprimable à l'encre pour des étiquettes ayant une couche centrale de support comportant un matériau polymère et au moins une couche superficielle qui est imprimable à l'encre, la couche superficielle imprimable à l'encre ayant une épaisseur allant de 0,1 µm à 0,5 µm et comportant : un copolymère de styrène et de butadiène ; et un polystyrène en une quantité allant de 0 % à environ 30 % en poids de la couche superficielle.

2. Film frontal pour étiquettes selon la revendication 1, dans lequel la couche superficielle imprimable à l'encre comporte de 0 % en poids à moins de 20 % en poids de polystyrène.

3. Film frontal pour étiquettes selon la revendication 1 ou la revendication 2, dans lequel le copolymère est un copolymère séquencé de styrène et de butadiène.

4. Film frontal pour étiquettes selon l'une quelconque des revendications 1 à 3, ne comportant sensiblement aucun homopolymère de styrène.

5. Film frontal pour étiquettes selon l'une quelconque des revendications 1 à 4, dans lequel le copolymère est mélangé à un ou plusieurs autres matériaux dans la couche superficielle.

6. Film frontal pour étiquettes selon la revendication 5, dans lequel le copolymère est mélangé à un homopolymère de styrène.

7. Film frontal pour étiquettes selon la revendication 6, dans lequel l'homopolymère de styrène est présent dans la couche superficielle en une quantité de moins de 20 % en poids du revêtement.

8. Film frontal pour étiquettes selon l'une quelconque des revendications 1 à 7, comportant au moins un constituant de liaison ayant une compatibilité avec le matériau polymère de la couche centrale et avec la couche superficielle, ladite compatibilité du constituant de liaison empêchant le délaminage de la couche superficielle par rapport à la couche centrale, ledit au moins un constituant de liaison étant éventuellement mis en oeuvre dans une couche de liaison du film entre la couche centrale et ladite au moins une couche superficielle ou dans la couche centrale ou dans la couche superficielle, et le constituant de liaison comportant éventuellement un dérivé de styrène-butadiène, éventuellement de styrène-butadiène hydrogéné.

9. Film frontal pour étiquettes selon l'une quelconque des revendications 1 à 8 imprimé sur la couche superficielle par au moins une encre.

10. Étiquette réalisée à partir d'un film frontal selon la revendication 9.

11. Pellicule d'étiquettes pour étiquettes adhésives qui comporte : un film frontal à plusieurs couches selon l'une quelconque des revendications 1 à 9, et une couche adhésive mise en oeuvre sur le film frontal.

12. Pellicule d'étiquettes selon la revendication 11, dans lequel la couche adhésive est une couche adhésive sensible à la pression.

13. Pellicule d'étiquettes selon la revendication 11 ou la revendication 12 mis en oeuvre avec un dos revêtu décollable en contact avec la couche adhésive et joint de manière décollable à celle-ci.

14. Étiquette adhésive découpée à l'emporte-pièce de la pellicule d'étiquette selon la revendication 13.
